# EUROPÄISCHE PATENTSCHRIFT

(11) **EP 1 898 114 B1**
(45) Veröffentlichungstag und Bekanntmachung des Hinweises auf die Patenterteilung: **11.02.2009**
(21) Anmeldenummer: 07017188.9
(22) Anmeldetag: 03.09.2007
(51) Int. Cl.: F16D 65/092

(54) **Bremsbelag für Fahrzeug-Scheibenbremsen**
Brake lining for vehicle disc brakes
Garniture de frein pour freins à disque de véhicule

(30) Priorität: 02.09.2006 DE 102006041235
(43) Veröffentlichungstag der Anmeldung: 12.03.2008
(73) Patentinhaber: BPW Bergische Achsen KG, 51674 Wiehl (DE)
(72) Erfinder: Schwarz, Michael, Dipl.-Ing., 51469 Berg.-Gladbach Groneu (DE)
(74) Vertreter: Christophersen & Partner

(56) Entgegenhaltungen:
- EP-A- 0 355 936
- EP-A- 1 067 304
- EP-A- 1 610 025
- GB-A- 1 247 261
- US-A- 5 064 028

## Beschreibung

Die Erfindung betrifft einen Bremsbelag für eine Fahrzeug-Scheibenbremse, mit einer einen Reibbelag tragenden Rückenplatte, mit an der Umfangskontur der Rückenplatte ausgebildeten Übertragungsflächen zur Übertragung der Bremsreaktionskräfte in Drehrichtung, mit Abstützflächen zur Abstützung des Bremsbelags zur Scheibenbrems-Drehachse hin, wobei eine erste Abstützfläche zur Abstützung in einer ersten Einbaustellung an der Umfangskontur der Rückenplatte ausgebildet ist und eine zweite Abstützfläche zur Abstützung in einer zweiten Einbaustellung einen Abstand gegenüber der ersten Abstützfläche aufweist, und mit Mitteln zur Sicherung des Bremsbelags gegen ein Herausfallen aus der Scheibenbremse.

Bei Fahrzeug-Scheibenbremsen ist der die Bremsscheibe übergreifende Bremssattel bzw. das Bremsgehäuse an einem fahrzeuginnenseitig der Bremsscheibe an der Achse montierten Träger angeordnet. Bekannt sind zwei Arten von Trägen, nämlich einerseits Träger, die die Bremsscheibe mit einer Art Rahmen umgreifen, und andererseits Träger ohne einen solchen Umgriff. Bei Fahrzeug-Scheibenbremsen mit einem die Bremsscheibe umgreifenden Rahmen, kann der fahrzeugaußen liegende Bremsbelag, ebenso wie der fahrzeuginnere Bremsbelag, in einem von dem Träger gebildeten Belagschacht untergebracht werden. Bei rahmenlosen Fahrzeug-Scheibenbremsen ist eine solche Unterbringung nur bei dem fahrzeuginneren Bremsbelag möglich. Der fahrzeugaußen liegende Bremsbelag wird in einem von dem Bremssattel gebildeten Belagschacht untergebracht. Bei rahmenlosen Fahrzeug-Scheibenbremsen ergibt sich damit für den Bremsbelag, je nach Einbaustellung, eine Unterbringung in einerseits dem Träger und andererseits im Sattel.

Um bei einer rahmenlosen Bremse gleiche Bremsbeläge für die fahrzeugäußere wie auch die fahrzeuginnere Einbaustellung verwenden zu können, ist aus der EP 1 610 025 A1 ein Bremsbelag bekannt, der zur Abstützung in Richtung der Bremsscheiben-Drehachse unten an seiner Umfangskontur Abstützflächen aufweist, über welche er sich in der fahrzeuginneren Einbaustellung nach radial innen zur Bremsscheiben-Drehachse hin abstützt. Darüber hinaus weist der Bremsbelag zweite Abstützflächen für die fahrzeugäußere Einbaustellung auf, so dass ein solcher Bremsbelag sowohl fahrzeuginnen wie auch fahrzeugaußen eingesetzt werden kann. Die zweiten Abstützflächen werden gebildet von oberhalb des Außenrandes der Belagträgerplatte seitlich abgewinkelt verlaufenden Laschen, deren Unterseite als Abstützfläche dient.

Nach radial außen hin sind die Bremsbeläge der EP 1 610 025 A1 über einen sich quer über die Belagschächte erstreckenden Niederhalter und über zwischen dem Niederhalter und den Bremsbelägen angeordnete Federelemente gesichert. Die Federelemente stützen sich mit einem Mittelbereich gegenüber dem Niederhalter ab, wobei die Enden der Federn seitlich des Niederhalters in an den Oberseiten der Laschen vorgesehene, durch Stanzen gefertigte Öffnungen eingreifen.

Diese Bremsbeläge bzw. deren Sicherungsmittel haben sich als nachteilig erwiesen. Zum einen ist das von oben in die Abstützlaschen eingesteckte Federelement der im Bremsbetrieb von der Bremsscheibe und den Bremsbelägen ausgehenden Hitze ausgesetzt, was auf Dauer zu einer Schwächung der aus einem Federstahl bestehenden Feder führen kann. Darüber hinaus hat sich die Konstruktion des Bremsbelags aufgrund der Gestaltung der seitlich abgewinkelten Abstützlaschen als aufwendig erwiesen. Denn bei der Herstellung der Rückenplatte sind mehrere Biege- und Stanzoperationen zur Herstellung der Laschen und der an den Laschen für das Federelement vorgesehenen Öffnungen erforderlich.

**Aufgabe** der Erfindung ist es, einen Bremsbelag anzugeben, der zuverlässig im Belagschacht sicherbar ist und sich durch eine nur wenige Fertigungsschritte erfordernde Herstellbarkeit auszeichnet.

Diese Aufgabe wird bei einem Bremsbelag der eingangs genannten Art erfindungsgemäß durch die kennzeichnenden Merkmale der Ansprüchen 1 und 2 **gelöst.**

Die Ausnehmung bzw. die Kontur am Außenrand der Rückenplatte kann bereits beim Gießen der Rückenplatte vorgesehen werden. Es ist nicht erforderlich, Laschen oberhalb des Außenrandes der Belagträgerplatte abzuwinkeln und diese anschließend mit einer Einstanzöffnung zum Einstecken einer Feder zu versehen. Es ergibt sich eine Herstellung des Bremsbelags mit wenigen Schritten.

Vorteilhafte Ausgestaltungen des Bremsbelags sind in den abhängigen Unteransprüchen angegeben.

Einzelheiten und weitere Vorteile der Erfindung werden nachfolgend anhand der beigefügten Zeichnungen erläutert. Darin zeigen:
- Fig. 1: einen Teilschnitt durch eine rahmenlose Scheibenbremse mit Bremsbelägen gemäß einem ersten Ausführungsbeispiel;
- Fig. 2: die Scheibenbremse nach Figur 1 bei teilweise geöffnetem Niederhalter;
- Fig.3: einen Teilschnitt durch die Scheibenbremse entsprechend der in Figur 1 eingezeichneten Schnittebene III - III;
- Fig. 4: in perspektivischer, teils geschnittener und auf die hier interessierenden Komponenten reduzierten Darstellung eine rahmenlose Scheibenbremse mit Bremsbelägen gemäß einem zweiten Ausführungsbeispiel, wobei Bremssattel und Bremsgehäuse geschnitten dargestellt sind;
- Fig. 5: die Scheibenbremse nach Fig. 4 in einer Seitenansicht;
- Fig. 6: einen vergrößerten Ausschnitt aus der Fig. 5 in Vollschnitt-Darstellung;
- Fig. 7: einen Schnitt gemäß der in Fig. 6 bezeichneten Schnittebene VII - VII;
- Fig. 8 a - c: die Scheibenbremse nach Fig. 4 in anderer perspektivischer Darstellung und in drei verschiedenen Stufen der Zusammensetzung, um so die Einzelheiten besser erkennen zu können,
- Fig. 9a: in perspektivischer Darstellung eine rahmenlose Scheibenbremse mit Bremsbelägen gemäß einem dritten Ausführungsbeispiel;
- Fig. 9b: eine der Darstellung in Figur 6 entsprechende Schnittdarstellung der Scheibenbremse aus Fig. 9a;
- Fig. 10a: eine schematische Darstellung des Zusammenwirkens des Niederhalters mit den Bremsbelägen;
- Fig. 10b: eine der Figur 10a entsprechende schematische Darstellung, jedoch bei stark abgenutzten Bremsbelägen;
- Fig. 11: in perspektivischer Ansicht eine Ausführung eines Niederhalters;
- Fig. 12: eine Draufsicht einer weiteren Ausführung eines Niederhalters und
- Fig. 13: eine Schnittdarstellung des Niederhalters aus Fig. 12 gemäß der Schnittlinie XIII-XIII in Fig. 12.

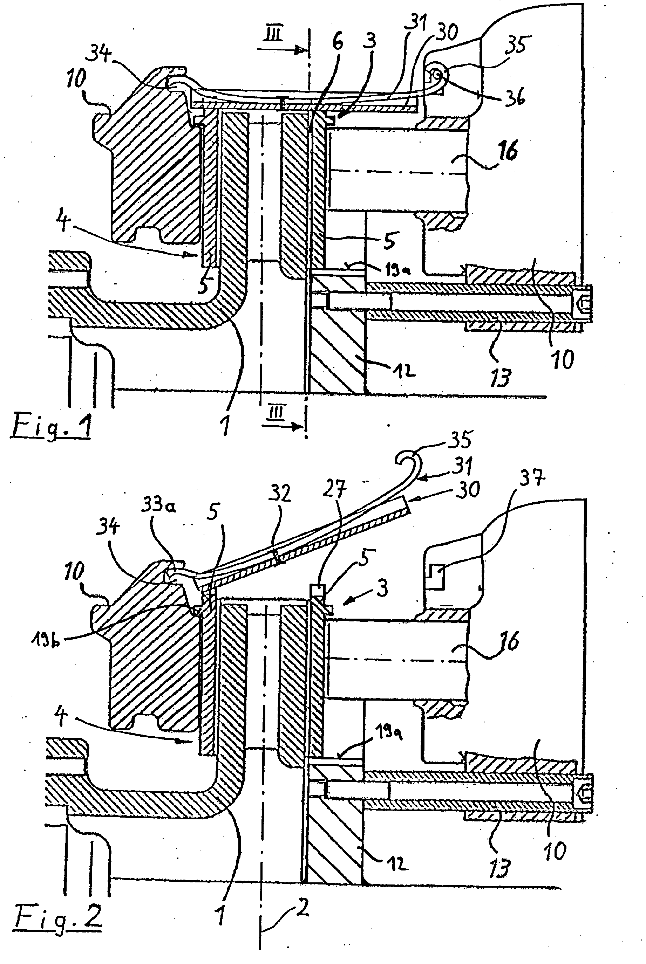

In den Fign. 1 bis 9b sind rahmenlose Fahrzeug-Scheibenbremsen mit unterschiedlichen Ausführungen von Bremsbelägen dargestellt.

Einzelheiten einer rahmenlosen Fahrzeug-Scheibenbremse werden zunächst unter Bezugnahme auf Fig. 1 erläutert, die den Grundaufbau einer Fahrzeug-Scheibenbremse mit einer Bremsscheibe 1, hier des innen belüfteten Bautyps, den beiderseits der Bremsscheibe 1 angeordneten Bremsbelägen 3,4, dem Bremsträger 12 und dem Bremsgehäuse bzw. Bremssattel 10 zeigt.

Im Bremsgehäuse 10 längsbeweglich geführt sind Druckstempel 16, welche sich gegen den inneren Bremsbelag 3 abstützen. Der äußere Bremsbelag 4 hingegen ist, wie bei Scheibenbremsen des Gleitsattel- bzw. Schwimmsattel-Typs üblich, unmittelbar gegen den Bremssattel 10 abgestützt.

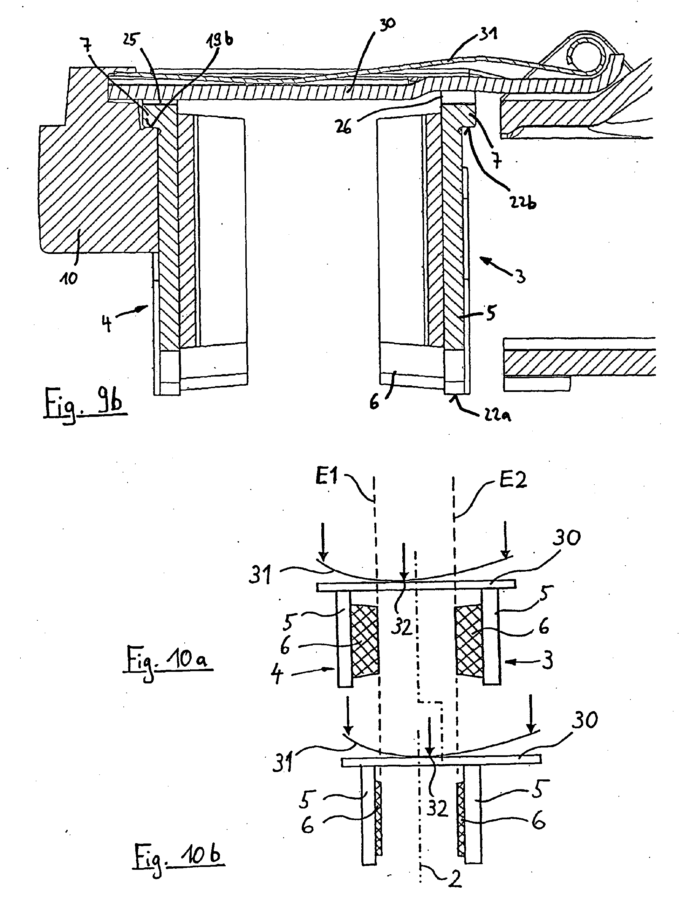

Bei der Darstellung nach den Figuren 1 und 2 sind die Reibbeläge der Bremsbeläge 3, 4 bereits stark abgenutzt. Demgegenüber zeigt Figur 10a die neuen, frischen Bremsbeläge 3, 4, jeweils bestehend aus der aus einem Gussmaterial gefertigten Rückenplatte 5 sowie den zur Bremsscheibe hin weisenden Reibbelägen 6.

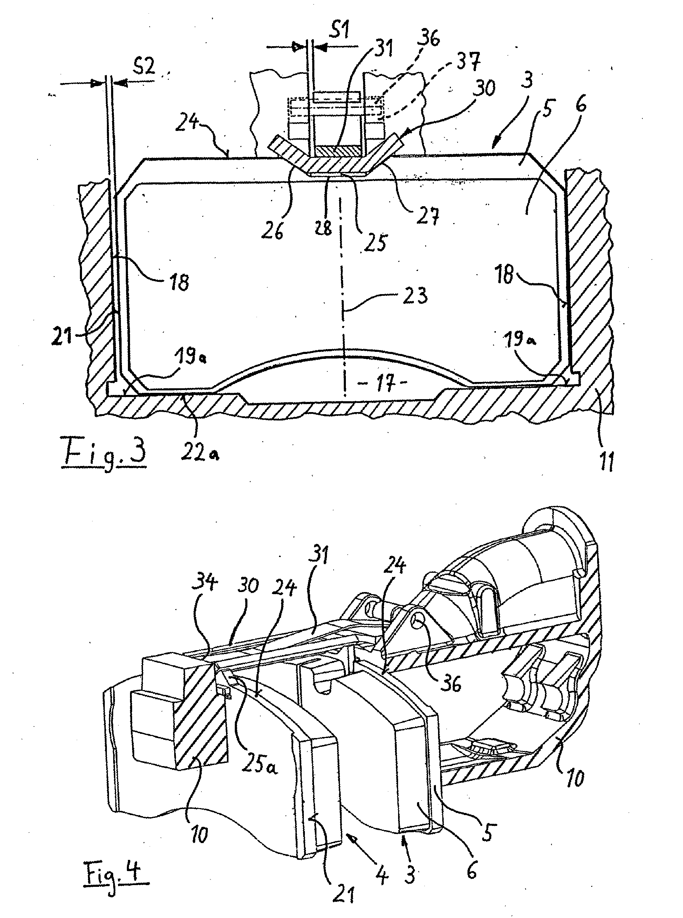

Der innere Bremsbelag 3 wird fahrzeuginnenseitig der Bremsscheibe 10 in einem Belagschacht 17 des Trägers 12 angeordnet, was im Folgenden anhand der Darstellung in Fig. 3 näher erläutert wird. Der Belagschacht 17 dient der Aufnahme und je nach Anordnung auch der Führung des Bremsbelags 3 und ist zu diesem Zweck mit entsprechenden Aufnahme- und Führungsflächen 18, 19a versehen, vgl. auch Fig. 2. Es handelt sich hierbei um passgenau gearbeitete Flächen, welche z.B. durch Schleifen oder durch Fräsen spanabhebend hergestellt werden. Erste Aufnahmeflächen 18 erstrecken sich parallel zueinander und weisen aufeinander zu. Sie übernehmen den größten Teil der Bremsreaktionskräfte. Zweite Aufnahmeflächen 19a weisen im Wesentlichen radial nach außen. Sie befinden sich in ein- und derselben Ebene. Auch die zweiten Aufnahmeflächen 19a übernehmen einen Teil der Bremsreaktionskräfte, vor allem aber stützen sie die Bremsbeläge 3 zur Scheibenbrems-Drehachse hin ab. Korrespondierend zu den Aufnahmeflächen 18, 19a des Belagschachts 17 sind auch die Bremsbeläge 3, 4 an ihrer Rückenplatte 5, deren Kontur gegenüber der Außenkontur des Reibbelags 6 vergrößert ist, mit Aufnahme- und Führungsflächen versehen. Übertragungsflächen 21 der Rückenplatte 5 können sich gegen die Flächen 18 des Belagschachts, und Abstützflächen 22a gegen die Flächen 19a des Belagschachts 17 abstützen. Vorzugsweise sind, wie dargestellt, die Bremsbeläge 3, 4 symmetrisch in Bezug auf ihre Bremsbelag-Mittellinie 23 gestaltet. Jedoch sind auch asymmetrische Gestaltungen in Bezug auf die Bremsbelag-Mittellinie 23 möglich.

Die Aufnahme des fahrzeugaußenliegenden Bremsbelags 4 erfolgt in einem Belagschacht des Bremssattels, was nachfolgend anhand der Darstellungen in den Fign. 4 bis 6 erläutert werden wird, die einen Vorsprung 7 an den Rückenplatten 5 erkennen lassen, über den der äußere Bremsbelag 4 nach radial innen hin am Bremssattel 10 abgestützt ist. Die Abstützung des äußeren Belags 4 in Drehrichtung erfolgt über an der Umfangskontur der Rückenplatte 5 ausgebildete Übertragungsflächen 21 gegenüber einer Aufnahmefläche des Bremssattels, ähnlich der Abstützung des inneren Bremsbelags 3.

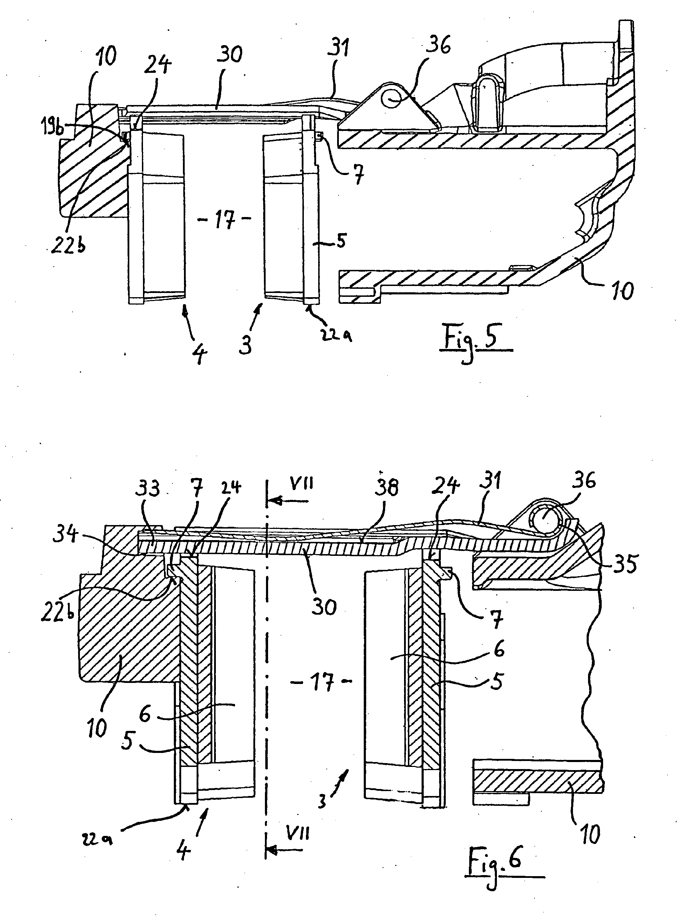

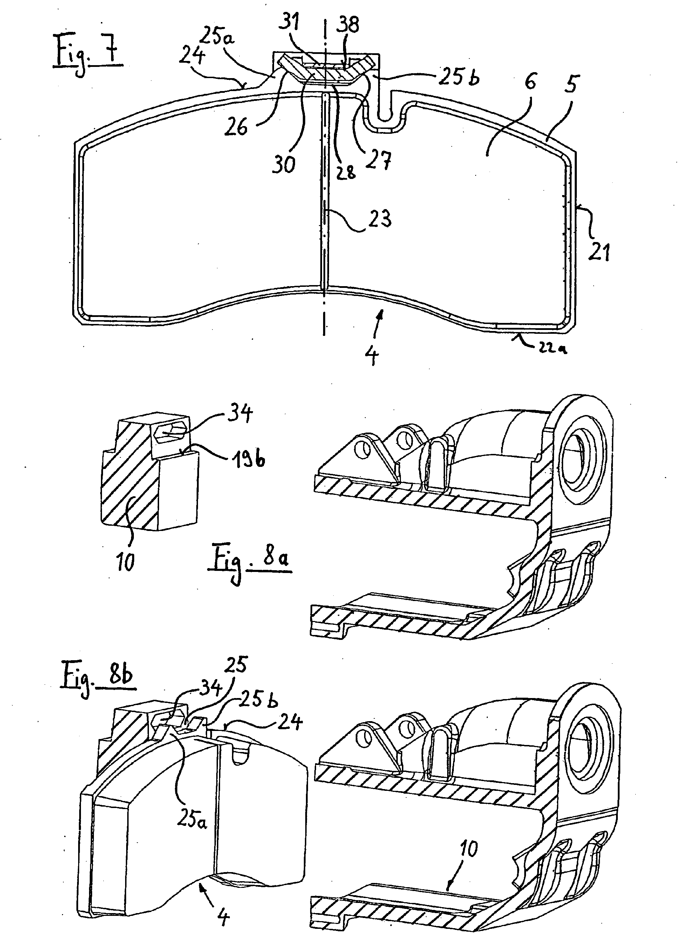

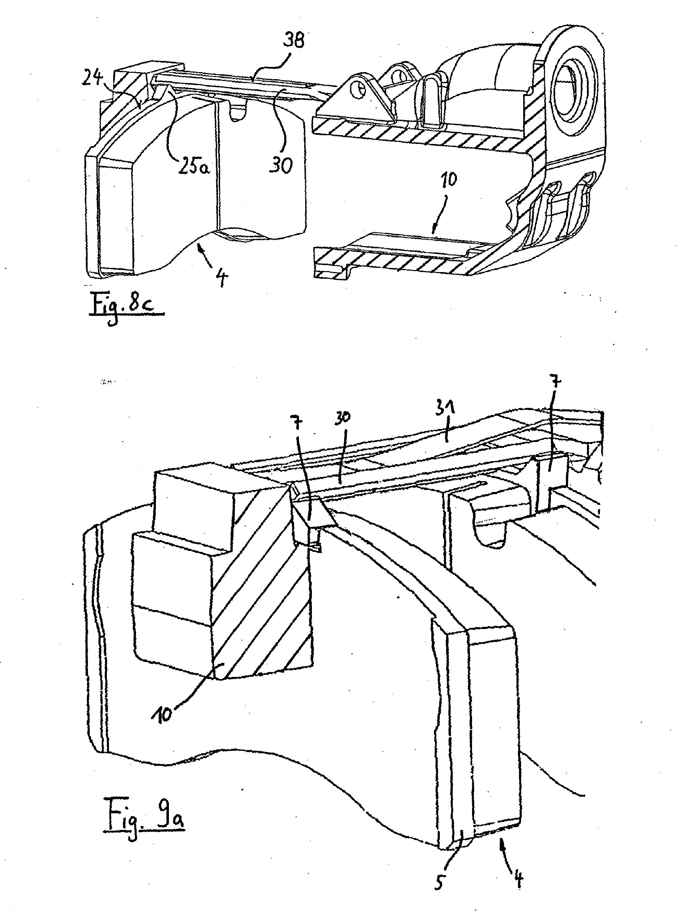

Der Vorsprung 7 wird beim Gießen der Belagrückenplatte 5 einstückig an dieser angeformt und hat, dem Außenrand 24 abgewandt, eine Unterseite, die eine zweite Abstützfläche 22b zur Abstützung des Belags 4 darstellt. Beim fahrzeugaußenliegenden Bremsbelag 4 erfolgt die Abstützung über diese Abstützfläche 22b und die zugehörige Aufnahmefläche 19b des Bremssattels 10, vgl. auch Fign. 2 und 8a. Dies ist der einzige Halt des äußeren Bremsbelags 4 zur Bremsscheibenachse hin. Auch der andere Belag 3 hat einheitlich den Vorsprung 7, nur ist er dort ohne Funktion, da die Abstützung des innenliegenden Bremsbelags 3 über die an der Kontur der Rückenplatte 5 vorgesehene Aufnahmefläche 22a erfolgt. Die Abstützflächen 22a, 22b weisen einen Abstand auf, der dem Abstand der Aufnahmefläche 19a des Rahmens und 19b des Sattels entspricht, so dass die Reibbeläge 6 der Bremsbeläge 3, 4 einander gegenüber stehen, vgl. Fign. 2, 6.

Die Abstützung des fahrzeugaußen liegenden Bremsbelags 4 erfolgt in Richtung zur Drehachse der Fahrzeug-Scheibenbremse über den an der Rückseite der Belagträgerplatte 5 einstückig angeformten Vorsprung 7. Wird der Bremspad 4 in der fahrzeuginnenliegenden Einbaustellung montiert, so bleibt der Vorsprung 7 bzw. die an dessen Unterseite vorgesehene zweite Abstützfläche 22b ohne Funktion, d. h. die Abstützung in Richtung der Bremsscheibenachse erfolgt über die an der Umfangskontur der Belagträgerplatte 5 angeformte, erste Abstützfläche 22a. Die Bremsklötze 3, 4 sind jeweils mit einer an der Umfangskontur ausgebildeten ersten Abstützfläche 22a und einer an dem rückseitig an der Belagträgerplatte 5 angeformten Vorsprung 7 augebildeten Abstützfläche 22b versehen. Die Abstützfläche 22b am Vorsprung 7 und die Abstützfläche 22a an der Kontur der Belagträgerplatte 5 weisen in radialer Richtung einen Abstand zueinander auf, der dem radialen Abstand der fahrzeugaußen am Bremssattel 10 vorgesehenen Aufnahmefläche 19b (vgl. Fig. 8a) zu der fahrzeuginneren Aufnahmefläche 19a (vgl. Fig. 3) entspricht.

Eine zweite Ausführungsform der Bremsbeläge 3, 4 ist in Fig. 9a in einer perspektivischen Darstellung und in Fig. 9b in einer Schnittdarstellung zu erkennen. Im Gegensatz zu den zuvor beschriebenen Bremsbelägen 3, 4 weisen die Bremsbeläge 3, 4 in den Fign. 9a und 9b an der Rückenplatte 5 einen Vorsprung 7 auf, der sich nach radial außen bis in den Bereich eines Niederhalters 30 erstreckt. Der Vorsprung 7 steht aus der Fläche der Rückenplatte 5 hervor und erstreckt sich nach radial außen bündig bis in die Kontur 25a, 25b bzw. die Ausnehmung 25. Hierdurch ergibt sich eine gegenüber der vorstehend beschriebenen Ausführungsform der Bremsbeläge verbreiterte Anlage zwischen dem Niederhalter 30 und den Anlageflanken 26, 27 der in diesem Bereich eine größere Materialstärke aufweisenden Belagrückplatte 5, vgl. Fig. 9b.

Diese Ausführung hat sich als vorteilhaft erwiesen, da es bei der zuvor beschriebenen Ausführung mit balkenförmigem Vorsprung 7 insbesondere bei unebenen Straßenverhältnissen zu einem Verkanten des nur über die schmale Balkenkontur gehaltenen Bremspads 4 im außenliegenden Belagschacht bis hin zu Abrissen des Vorsprungs 7 und damit einem Ausfall der Bremse kommen kann. Durch die verbreiterte Anlage zwischen dem Niederhalter 30 und der Belagrückenplatte 5 werden diese Gefahren deutlich reduziert. Der Vorsprung 7 füllt den Raum zwischen der Abstützfläche 22b bzw. der Aufnahmefläche 19b des Bremssattels 10 und den Flanken 26 und 27, wodurch sich eine durchgehende, auch bei schwierigen Straßenverhältnissen zuverlässige Abstützung ergibt. Mit der vergrößerten Anlagefläche des Bremspads 4 am Niederhalter 30 ergeben sich insgesamt geringere Flächenpressungen. Die Kippneigung des außen liegenden Bremspads 4 ist selbst bei sehr ungünstigen Straßenverhältnissen deutlich reduziert. Auch die Gefahr von Abreißern ist reduziert. Der Bereich 28 zwischen den Flanken 26, 27 liegt nicht am Niederhalter 30 an, vgl. auch Fig. 7.

Nachfolgend werden Einzelheiten der Herausfallsicherung für die Bremsbeläge 3, 4 erläutert, die bei einem Bremsbelag mit balkenförmigem Vorsprung 7 wie auch einem sich nach radial außen hin in die Niederhalteranlageflächen erstreckenden Bremsbelag gleichermaßen einsetzbar sind.

Bei dem Bremsbelag gemäß der Darstellung in Fig. 3 ist der Außenrand 24 der Rückenplatte 5 der Bremsbeläge 3, 4 im Mittelbereich als nach innen zurückspringende oder auch nach außen vorspringende Kontur gestaltet. Dargestellt ist als Kontur eine zurückspringende Ausnehmung 25 nach Art einer Kerbe. Diese ist bezüglich der Bremsbelag-Mittellinie 23 symmetrisch in Gestalt eines sich zur Scheibenbrems-Drehachse hin verjüngenden Trapezes. Die Kontur bzw. Ausnehmung 25 stützt sich gegen einen Niederhalter 30 ab. Dieser erstreckt sich, wie insbesondere auch Figur 1 erkennen läßt, als federbelasteter Bügel quer zu den Bremsbelägen 3, 4 über die Belagsschächte 17 hinweg, und er kann seinerseits durch noch im Einzelnen beschriebene Hilfsmittel an dem Bremssattel bzw. Bremsgehäuse 10 festlegbar sein.

Gemäß Figur 3 ist die Querschnittsform des Niederhalters 30 an die Form der korrespondierenden Kontur der Rückenplatte 5 angepasst. Beim Ausführungsbeispiel ist der Niederhalter 30 ein starres Metallprofil mit sich nach unten verjüngendem, trapezförmigem Querschnitt. Auf diese Weise stützt sich der Niederhalter 30 an den beiden schrägen Flanken 26, 27 der Ausnehmung 25 zugleich ab, wobei der Niederhalter 30 an beiden Flanken 26, 27 flächig anliegt. In einem Bereich 28 zwischen den Flanken 26, 27 liegt der Niederhalter 30 nicht an der Rückenplatte an.

Der Niederhalter 30 übt, indem er durch eine Druckfeder 31 belastet wird, einen radial nach innen gerichteten Druck auf die Bremsbeläge 3, 4 aus, wodurch diese mit ihren Abstützflächen 22a, 22b gegen die Aufnahmeflächen 19a, b der Belagschächte 17 gedrückt werden, und ferner die Bremsbeläge nicht aus den Belagschächten herausfallen können. Zur Erzielung dieses Drucks ist der Niederhalter 30 durch ein Federelement 31 mit einer radial nach innen gerichteten Kraft beaufschlagt. Als Federelement 31 dient eine gebogene Blattfeder, welche sich mit ihrer Außenbiegung außen auf dem langgestreckten Niederhalter 30 abstützt. Sie kann über ein Niet 32 (Fign. 1 und 2) mit dem Niederhalter 30 verbunden sein.

Die Blattfeder 31 ist parallel, d.h. längs des starren Niederhalters 30 angeordnet. Auf diese Weise befindet sich die Blattfeder 31, bezogen auf den Bremsschacht, gleichsam hinter dem Niederhalter 30. Die Blattfeder 31 ist dort besser gegen jene Hitze abgeschirmt, die im Bremsbetrieb von der Bremsscheibe 1 ebenso wie von den Bremsbelägen 3, 4 ausgeht.

Mit ihrem einen Ende 33a sitzt die Blattfeder 31 in einer Ausnehmung 34 des Bremssattels 10. Das andere Ende der Blattfeder 31 ist zu einem Federauge 35 geformt. Dieses ist um einen Befestigungsbolzen 36 geführt, der wiederum an dem Bremsgehäuse festlegbar ist. Hierzu zeigt Fig. 2 die gelöste Blattfeder 31 ohne Befestigungsbolzen, und Fig. 1 die Einspannung der Blattfeder mittels des in einer Öffnung 37 des Bremsgehäuses verriegelten Befestigungsbolzens 36. Das Ende der Blattfeder 31 muss nicht zu einem Federauge geformt sein, denkbar sind auch Lösungen mit Teilfederaugen, Abwinklungen usw., die eine Fixierung an dem Bolzen 36 erlauben.

Gemäß Fig. 3 ist das Federelement 31 in Umfangsrichtung der Bremsscheibe 1 mit einem beidseitigen Spiel S1 in dem Bremssattel 10 geführt. Auf diese Weise wird die Bewegung der Bremsbeläge 3, 4 in ihren jeweiligen Belagschächten 17 nicht durch den Niederhalter 30 beeinträchtigt. Dieses in Drehrichtung bestehende Spiel der Bremsbeläge 3, 4 in ihren Schächten 17 ist in Figur 3 mit S2 bezeichnet.

Bei der Ausführungsform nach den Fign. 1 bis 3 ist der bügelförmige Niederhalter 30 kürzer als die Blattfeder 31, und nur die Blattfeder 31 ist mit ihren Enden, z. B. dem Ende 33a, in Öffnungen oder Ausnehmungen des Bremsgehäuses bzw. des Bremssattels 10 festgelegt. Durch eine entsprechende Verlängerung des bügelförmigen Niederhalters 30 ist es jedoch auch möglich, diesen mit seinen Enden bis in Öffnungen oder Ausnehmungen des Bremsgehäuses hineinzuführen, und ihn trotzdem in Drehrichtung zur Sicherstellung des Spiels S1 beweglich zu halten. Im Falle eines Bruchs oder eines sonstigen Versagens des Federelements 31 sind die Bremsbeläge dann immer noch durch den Niederhalter 30 gegen ein Herausfallen aus ihren Belagschächten gesichert.

Im Folgenden werden Einzelheiten der im Zusammenhang mit der rahmenlosen Fahrzeug-Scheibenbremse gemäß den Fign. 4 bis 9b realisierten Herausfallsicherung erläutert. Gleiche oder gleich wirkende Bauteile wie bei der Bremse gemäß den Fign. 1 bis 3 sind mit den selben Bezugszeichen versehen und bei den dargestellten Ausführungen gleichermaßen einsetzbar.

Abweichend von dem zuvor beschriebenen Ausführungsbeispiel der Bremsbeläge ist, wie insbesondere Fig. 7 erkennen läßt, die Kontur der Bremsbeläge 3, 4 an deren Außenrand 24. Die Kontur weist anstelle einer Ausnehmung zwei Vorsprünge 25a, 25b an den Rückenplatten 5 auf. Die Vorsprünge 25a, 25b sind einander zugewandt jeweils mit den Flanken 26 bzw. 27 versehen, so daß sich wiederum eine in etwa trapezförmige Kontur für die Anlage des im Querschnitt ebenfalls trapezförmigen Niederhalters 30 ergibt.

Im Vergleich zu dem ersten Ausführungsbeispiel ist der Niederhalter 30 soweit verlängert, daß er mit beiden Enden bis in Öffnungen bzw. Ausnehmungen des Bremsgehäuses hineinragt. Das eine Ende 33 des Niederhalters 30 reicht hierzu in die Ausnehmung 34 des Bremssattels 10, auf seinen Umfang bezogen, kontaktlos bzw. schwimmend hinein. Das andere Ende führt bis unter den am Bremsgehäuse 10 festgelegten Befestigungsbolzen 36. Selbst im Fall eines Verlustes oder eines Bruchs des Federelementes 31 kann sich der Niederhalter 30 nicht vom Bremsgehäuse lösen.

Die Blattfeder 31 stützt sich von außen gegen den im Vergleich starr ausgebildeten Niederhalter 30 ab. Für diese Abstützung besonders geeignet ist jene Rinne 38 des Niederhalters 30, welche sich außen infolge dessen trapezförmigen Querschnittes ergibt. Wiederum ist die Blattfeder 31 parallel, d.h. längs des Niederhalters 30 angeordnet, wodurch sie sich, bezogen auf den Belagschacht 17, "hinter" dem Niederhalter 30 befindet. Die Blattfeder 31 ist dort besser gegen jene durch Wärmeübergang und durch Strahlungswärme übertragene Hitze abgeschirmt, die im Bremsbetrieb von der Bremsscheibe 1 ebenso wie von den Bremsbelägen 3, 4 ausgeht. Vor allem im Dauerlastbetrieb wird eine erhöhte Lebensdauer des aus Federstahl bestehenden Federelementes 31 erzielt.

Die Befestigung des Federelementes 31 erfolgt bei der Ausführungsform nach den Fign. 4 bis 9b analog der Befestigung des Niederhalters 30, d.h. das eine Ende der Blattfeder 31 sitzt in der Ausnehmung 34, wohingegen das andere Ende den Befestigungsbolzen 36 umschließt. Die Vorbiegung der aus Federstahl bestehenden Blattfeder 31 ist dergestalt, daß diese, wie bereits beschrieben, nur an einem Abstützungsort 32 in der langgestreckten Rinne 38 des Niederhalters 30 anliegt.

Es ist von Vorteil, wenn die Blattfeder 31 nur an einem Ort am darunter liegenden Niederhalter 30 aufliegt. Dies kann, muß aber nicht der Ort des Niets 32 sein. Dies wird im Folgenden anhand der Fign. 10 a und 10 b erläutert.

Mit E1 ist die Anlageebene des Bremsbelags 4 an der Bremsscheibe, und mit E2 die Anlageebene des Bremsbelags 3 an der Bremsscheibe bezeichnet. Der Abstützungsort 32 des Federelementes 31 ist so gewählt, daß dessen Krafteinleitungspunkt im Falle neuer, vollständiger Reibbeläge 6 (Fig. 10 a) links, und im Falle vollständig verschlissener Reibbeläge 6 (Fig. 10 b) rechts der Bremsscheiben-Mittelebene 2 liegt. Der maximale Versatz des Krafteinleitungspunktes 32 in Bezug auf die Bremsscheiben-Mittelebene 2 ist geringer, als das Maß des zulässigen Reibbelag-Verschleißes. Auf diese Weise wird eine über die Lebensdauer der Bremsbeläge optimale Druckverteilung erzielt.

Der Bremsbelag 4 erfährt gegenüber dem Niederhalter 30 keine Relativbewegung bzw. wandert mit zunehmendem Verschleiß mit diesem gemeinsam auf die axial ortsfeste Bremsscheibe 1 zu. Dagegen ist die Bewegung des von dem Druckstempel 16 kraftbeaufschlagten Bremsbelags 3 gegenüber dem Niederhalter 30 gegenläufig. Der Krafteinleitungspunkt 32 bewegt sich somit auf den Bremsbelag 3 zu. Eine je hälftige Kraftbeaufschlagung auf die beiden Rückenplatten 5 kann über die gesamte Lebensdauer der Bremsbeläge 3, 4 nicht erzielt werden. Ein ausreichendes Optimum ist gegeben, wenn der Krafteinleitungspunkt 32 um das Verschleißmaß eines Reibbelages abgewandt dem Druckstempel 16 aus der Mitte heraus versetzt ist.

Es kann von Vorteil sein, wenn der Niederhalter 30 mit der Blattfeder 31 in Umlaufrichtung etwas versetzt in dem Bremsgehäuse 10 aufgenommen ist. Auf diese Weise legt sich der symmetrisch zu seiner Bremsbelag-Mittellinie 23 gestaltete Bremsbelag 3, 4 beim Bremsen immer an der Ablaufseite an.

Von Vorteil ist die Anordnung der Bauteile Federelement 31, Niederhalter 30 und Rückenplatten 5 der Beläge 3, 4 hinsichtlich ihrer Relativbewegungen zueinander. Die Bewegung der Bremsbeläge im Belagschacht 17, hervorgerufen durch die Mitnahme von der Bremsscheibe 1 beim Bremsvorgang und durch Erschütterungen im Fahrbetrieb, verursacht kaum Reibung an dem Federelement 31. Die reibungsempfindliche Blattfeder 31 ist sowohl gegenüber dem Bremsgehäuse bzw. -sattel 10 als auch am Abstützort 32 hinsichtlich dieser Bewegung begrenzt schwimmend gelagert, so daß sich die schädliche Reibung auf insgesamt großer Fläche günstig verteilt. Darüber hinaus ist die Blattfeder 31 frei von solchen Gleitbewegungen, welche aus der Zustellung des inneren Bremsbelages 3 herrühren. Diese verschleißende Reibung findet ausschließlich zwischen der stark dimensionierten Rückenplatte 5 und dem entsprechend widerstandsfähigen Niederhalter 30 statt. Von Vorteil sind hier die flächigen Kontaktstellen zwischen diesen zwei Bauteilen. Allerdings wäre selbst eine Linienberührung bei diesen starr ausgebildeten Bauteilen noch hinreichend.

Der Niederhalter 30 ist an seinen Längsseiten nach oben gekröpft. Die so geschaffenen Anlageflächen verteilen die vom Federelement 31 eingeleitete Belaghaltekraft gleichmäßig innerhalb eines Bremsbelages derart, daß die Kraftrichtung jeweils auf die Aufnahmeflächen 19a, 19b bzw. die Enden der Abstützflächen 22a, 22b zu gerichtet ist. Somit ist eine optimale Haltewirkung gegen Verkippen des Belages im Belagschacht 17 erreicht, welches durch ein Mitnahmemoment beim Bremsen hervorgerufen wird. Diese Wirkung stellt sich auch ein, wenn die Anlageflächen des Niederhalters schräg nach unten gerichtet sind bzw. aufeinander zugerichtet sind.

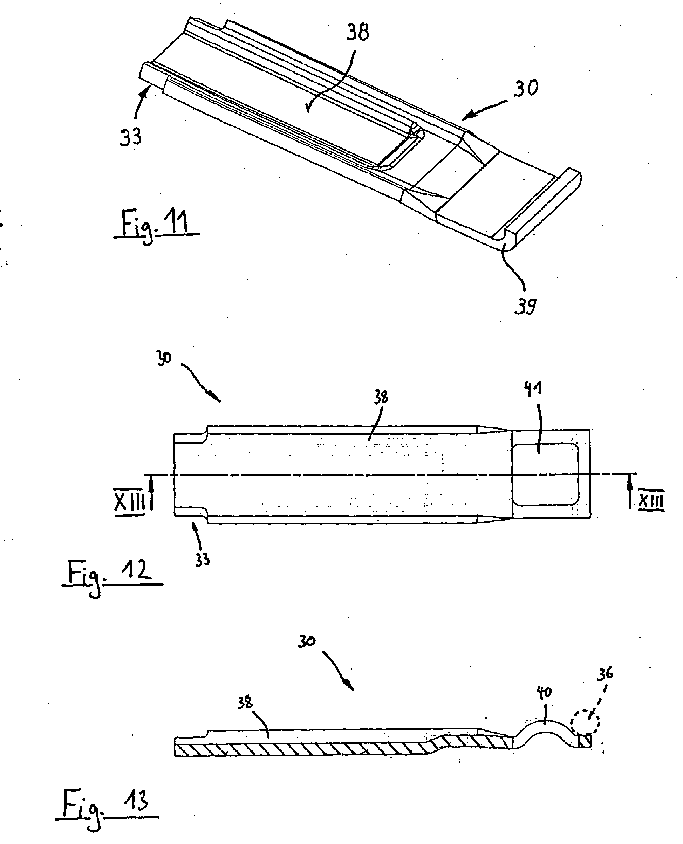

Wie die Fign. 11 bis 13 anhand der dort dargestellten Niederhalter 30 erkennen lassen, kann der Niederhalter 30 mit einer in seiner Längserstreckung verlaufenden Sicke verstärkt sein. Die Tiefe der Sicke 38 ist so dimensioniert, daß diese über die gesamte Standzeit der Verschleißteile keinen Kontakt zum Bremsbelag 3, 4 bzw. zur Rückenplatte 5 erhält. Der Niederhalter 30 kann vorteilhaft ein in Umformtechnik hergestelltes, leichtes und gleichwohl starres Metallteil sein.

Bei der Ausführung des Niederhaltes 30 nach Fig. 11 ist dieser am bremsgehäuseseitigen Ende 30 mit einer leichten Biegung 39 versehen, welche sich um das Federauge 35 herum legt. Im verschlossenen Zustand wird somit erreicht, das der Niederhalter 30 zwischen Bremsgehäuse und dem Befestigungsbolzen 36 in Richtung seiner Längserstreckung gehalten wird.

Eine weitere Ausführungsform eines Niederhalters 30 ist in den Fign. 12 und 13 dargestellt. Auf der Seite des Befestigungsbolzens 36 ist der Niederhalter 30 mit einer halbkreisförmigen Aufwölbung 40 versehen, die vor dem Bolzen 36 zur Anlage kommt, wie dies die die Position des Bolzens 36 veranschaulichende Strichkontur zeigt. Auch hierdurch wird eine Sicherung des Niederhalters 30 in dessen Längserstreckung erreicht. Im Bereich der Aufwölbung 40 ist der Niederhalter 30 mit einer Ausnehmung 41 versehen, die aus fertigungstechnischen Gründen vorgesehen ist. Der Niederhalter 30 wird nämlich zum Schutz vor Korrosion mit einer Oberflächenbeschichtung versehen, die in einem Tauchbad aufgebracht wird. Die Ausnehmung 41 dient als Halteelement bei der Beschichtung des Niederhalters 30 im Tauchbad.

### Bezugszeichenliste

- 1: Bremsscheibe
- 2: Bremsscheiben-Mittelebene
- 3: Bremsbelag
- 4: Bremsbelag
- 5: Rückenplatte
- 6: Reibbelag
- 7: Vorsprung
- 10: Bremsgehäuse, Bremssattel
- 12: Bremsträger
- 13: Gleitsattelführung
- 16: Druckstempel
- 17: Belagschacht
- 18: Aufnahmefläche
- 19a: Aufnahmefläche
- 19b: Aufnahmefläche
- 21: Übertragungsfläche
- 22a: Abstützfläche
- 22b: Abstützfläche
- 23: Bremsbelag-Mittelebene
- 24: Außenrand
- 25: Ausnehmung
- 25a: Vorsprung
- 25b: Vorsprung
- 26: Flanke
- 27: Flanke
- 28: Zwischenbereich
- 30: Niederhalter
- 31: Federelement, Blattfeder
- 32: Abstützungsort, Krafteinleitungspunkt
- 33: Ende des Niederhalters
- 33a: Ende der Blattfeder
- 34: Ausnehmung
- 35: Federauge
- 36: Befestigungsbolzen
- 37: Öffnung
- 38: Rinne, Sicke
- 39: Biegung
- 40: Aufwölbung
- 41: Ausnehmung

- E1: Anlageebene
- E2: Anlageebene
- S1: Spiel
- S2: Spiel

## Patentansprüche

1. Bremsbelag für eine Fahrzeug-Scheibenbremse, mit einer einen Reibbelag (6) tragenden Rückenplatte (5), mit an der Umfangskontur der Rückenplatte (5) ausgebildeten Übertragungsflächen (21) zur Übertragung der Bremsreaktionskräfte in Drehrichtung, mit Abstützflächen (22a, 22b) zur Abstützung des Bremsbelags zur Scheibenbrems-Drehachse hin, wobei eine erste Abstützfläche (22a) zur Abstützung in einer ersten Einbaustellung an der Umfangskontur der Rückenplatte (6) ausgebildet ist und eine zweite Abstützfläche (22b) zur Abstützung in einer zweiten Einbaustellung einen Abstand gegenüber der ersten Abstützfläche aufweist, und mit Mitteln zur Sicherung des Bremsbelags gegen ein Herausfallen aus der Scheibenbremse,
**dadurch gekennzeichnet,**
**dass** die Mittel in einer einander zugewandte Flanken (26, 27) aufweisenden Ausnehmung (25) am Außenrand (24) der Rückenplatte (5) bestehen, wodurch ein Niederhalter an beiden Flanken (26, 27) zugleich abstützbar ist.

2. Bremsbelag für eine Fahrzeug-Scheibenbremse, mit einer einen Reibbelag (6) tragenden Rückenplatte (5), mit an der Umfangskontur der Rückenplatte (5) ausgebildeten Übertragungsflächen (21) zur Übertragung der Bremsreaktionskräfte in Drehrichtung, mit Abstützflächen (22a, 22b) zur Abstützung des Bremsbelags zur Scheibenbrems-Drehachse hin, wobei eine erste Abstützfläche (22a) zur Abstützung in einer ersten Einbaustellung an der Umfangskontur der Rückenplatte (6) ausgebildet ist und eine zweite Abstützfläche (22b) zur Abstützung in einer zweiten Einbaustellung einen Abstand gegenüber der ersten Abstützfläche aufweist, und mit Mitteln zur Sicherung des Bremsbelags gegen ein Herausfallen aus der Scheibenbremse,
**dadurch gekennzeichnet,**
**dass** die Mittel durch eine mit einander zugewandten Flanken (26, 27) versehene Kontur (25a, 25b) am Außenrand (24) der Rückenplatte (5) gebildet werden, wodurch ein Niederhalter an beiden Flanken (26, 27) zugleich abstützbar ist.

3. Bremsbelag nach Anspruch 1 oder 2,
**dadurch gekennzeichnet,**
**dass** der Niederhalter ein federbelasteter Niederhalter ist.

4. Bremsbelag nach einem der Ansprüche 1 bis 3,
**dadurch gekennzeichnet,**
**dass** die Ausnehmung (25) bzw. Kontur (25a, 25b) symmetrisch zur Bremsbelag-Mittellinie (23) angeordnet ist.

5. Bremsbelag nach einem der vorhergehenden Ansprüche,
**dadurch gekennzeichnet,**
**dass** die Ausnehmung (25) bzw. Kontur (25a, 25b) eine trapezförmige Öffnung der Rückenplatte (5) bildet.

6. Bremsbelag nach einem der vorangehenden Ansprüche,
**dadurch gekennzeichnet,**
**dass** die Anlageflanken (26, 27) schräg zur Bremsbelag-Mittellinie (23) verlaufen.

7. Bremsbelag nach einem der vorangehenden Ansprüche,
**dadurch gekennzeichnet,**
**dass** die Anlageflanken (26, 27) zwischen sich einen nicht am Niederhalter anliegenden Bereich (28) einschließen.

8. Bremsbelag nach Anspruch 7,
**dadurch gekennzeichnet,**
**dass** der Zwischenbereich (28) quer zur Bremsbelag-Mittellinie (23) verläuft.

9. Bremsbelag nach einem der vorhergehenden Ansprüche,
**dadurch gekennzeichnet,**
**dass** an der dem Reibbelag (6) abgewandten Seite der Rückenplatte (5) ein Vorsprung (7) angeformt ist, der an seiner Unterseite mit der zweiten Abstützfläche (22b) versehen ist.

10. Bremsbelag nach Anspruch 9,
**dadurch gekennzeichnet,**
**dass** der Vorsprung (7) in Richtung des Außenrandes (24) bündig mit der Ausnehmung (25) bzw. der Kontur (25a, 25b) endet.

11. Bremsbelag nach einem der vorhergehenden Ansprüche,
**dadurch gekennzeichnet,**
**dass** die Rückenplatte (5) aus einem Gussmaterial besteht, wobei die Übertragungsflächen (21) und/oder die erste Abstützfläche (21 a) und/oder die zweite Abstützfläche (22b) spanabhebend nachgearbeitet sind.

## Claims

1. Brake lining for a vehicle disc brake, comprising a backplate (5) which carries a friction lining (6), comprising transmission surfaces (21) which are formed on the circumferential contour of the backplate (5) and which are designed to transmit the brake reaction forces in the rotation direction, comprising support surfaces (22a, 22b) for supporting the brake lining towards the disc brake rotation axis, wherein a first support surface (22a) for support in a first installation position is formed on the circumferential contour of the backplate (5) and a second support surface (22b) for support in a second installation position is at a distance from the first support surface, and comprising means for securing the brake lining against falling out of the disc brake, **characterised in that** the means consist of a recess (25) having flanks (26, 27) pointing towards one another on the outer edge (24) of the backplate (5), as a result of which a holding-down device can be supported against both flanks (26, 27) at the same time.

2. Brake lining for a vehicle disc brake, comprising a backplate (5) which carries a friction lining (6), comprising transmission surfaces (21) which are formed on the circumferential contour of the backplate (5) and which are designed to transmit the brake reaction forces in the rotation direction, comprising support surfaces (22a, 22b) for supporting the brake lining towards the disc brake rotation axis, wherein a first support surface (22a) for support in a first installation position is formed on the circumferential contour of the backplate (5) and a second support surface (22b) for support in a second installation position is at a distance from the first support surface, and comprising means for securing the brake lining against falling out of the disc brake, **characterised in that** the means are formed by a contour (25a, 25b) provided with flanks (26, 27) pointing towards one another on the outer edge (24) of the backplate (5), as a result of which a holding-down device can be supported against both flanks (26, 27) at the same time.

3. Brake lining according to claim 1 or 2, **characterised in that** the holding-down device is a spring-loaded holding-down device.

4. Brake lining according to one of claims 1 to 3, **characterised in that** the recess (25) or contour (25a, 25b) is arranged symmetrically with respect to the brake lining centre line (23).

5. Brake lining according to one of the preceding claims, **characterised in that** the recess (25) or contour (25a, 25b) forms a trapezoidal opening of the backplate (5).

6. Brake lining according to one of the preceding claims, **characterised in that** the bearing flanks (26, 27) run at an angle to the brake lining centre line (23).

7. Brake lining according to one of the preceding claims, **characterised in that** the bearing flanks (26, 27) enclose between them a region (28) which does not bear against the holding-down device.

8. Brake lining according to claim 7, **characterised in that** the intermediate region (28) runs transversely to the brake lining centre line (23).

9. Brake lining according to one of the preceding claims, **characterised in that** a protrusion (7) is integrally formed on the side of the backplate (5) facing away from the friction lining (6), which protrusion is provided on its underside with the second support surface (22b).

10. Brake lining according to claim 9, **characterised in that** the protrusion (7) in the direction of the outer edge (24) ends flush with the recess (25) or the contour (25a, 25b).

11. Brake lining according to one of the preceding claims, **characterised in that** the backplate (5) is made from a cast material, wherein the transmission surfaces (21) and/or the first support surface (21a) and/or the second support surface (22b) are subsequently machined by a material-removing process.

## Revendications

1. Garniture de frein pour un frein à disque de véhicule, avec une plaque arrière (5) portant une garniture de friction (6), avec des surfaces de transmission (21) réalisées sur le contour périphérique de la plaque arrière (5) pour la transmission des forces de réaction de freinage dans le sens de rotation, avec des surfaces d'appui (22a, 22b) pour l'appui de la garniture de frein vers l'axe de rotation du frein à disque, une première surface d'appui (22a) étant réalisée pour l'appui dans une première position de montage sur le contour périphérique de la plaque arrière (6) et une seconde surface d'appui (22b) présentant pour l'appui dans une seconde position de montage une distance par rapport à la première surface d'appui, et avec des moyens pour protéger la garniture de frein contre toute chute du frein à disque, **caractérisée en ce que** les moyens consistent en un évidement (25) présentant des flancs (26, 27) tournés l'un vers l'autre sur le bord extérieur (24) de la plaque arrière (5), de manière à ce qu'un serre-flan peut être en appui simultanément contre les deux flancs (26, 27).

2. Garniture de frein pour un frein à disque de véhicule, avec une plaque arrière (5) portant une garniture de friction (6), avec des surfaces de transmission (21) réalisées sur le contour périphérique de la plaque arrière (5) pour la transmission des forces de réaction de freinage dans le sens de rotation, avec des surfaces d'appui (22a, 22b) pour l'appui de la garniture de frein vers l'axe de rotation du frein à disque, une première surface d'appui (22a) étant réalisée pour l'appui dans une première position de montage sur le contour périphérique de la plaque arrière (6) et une seconde surface d'appui (22b) présentant pour l'appui dans une seconde position de montage une distance par rapport à la première surface d'appui, et avec des moyens pour protéger la garniture de frein contre toute chute du frein à disque, **caractérisée en ce que** les moyens sont formés par un contour (25a, 25b) présentant des flancs (26, 27) tournés l'un vers l'autre sur le bord extérieur (24) de la plaque arrière (5), de manière à ce qu'un serre-flan peut être en appui simultanément contre les deux flancs (26, 27).

3. Garniture de frein selon la revendication 1 ou 2, **caractérisée en ce que** le serre-flan est un serre-flan sollicité par ressort.

4. Garniture de frein selon l'une quelconque des revendications 1 à 3, **caractérisée en ce que** l'évidement (25) ou le contour (25a, 25b) est disposé de manière symétrique par rapport à la ligne médiane de la garniture de frein (23).

5. Garniture de frein selon l'une quelconque des revendications précédentes, **caractérisée en ce que** l'évidement (25) ou le contour (25a, 25b) forme une ouverture trapézoïdale de la plaque arrière (5).

6. Garniture de frein selon l'une quelconque des revendications précédentes, **caractérisée en ce que** les flancs d'appui (26, 27) s'étendent en biais par rapport à la ligne médiane de la garniture de frein (23).

7. Garniture de frein selon l'une quelconque des revendications précédentes, **caractérisée en ce que** les flancs d'appui (26, 27) délimitent entre eux une zone (28) ne reposant pas sur le serre-flan.

8. Garniture de frein selon la revendication 7, **caractérisée en ce que** la zone intermédiaire (28) s'étend transversalement à la ligne médiane de la garniture de frein (23).

9. Garniture de frein selon l'une quelconque des revendications précédentes, **caractérisée en ce que** sur le côté éloigné de la garniture de friction (6) de la plaque arrière (5), une saillie (7) est formée, laquelle est pourvue sur son dessous de la seconde surface d'appui (22b).

10. Garniture de frein selon la revendication 9, **caractérisée en ce que** la saillie (7) se termine en direction du bord extérieur (24) à fleur de l'évidement (25) ou du contour (25a, 25b).

11. Garniture de frein selon l'une quelconque des revendications précédentes, **caractérisée en ce que** la plaque arrière (5) se compose d'un matériau de fonderie, les surfaces de transmission (21) et/ou la première surface d'appui (21 a) et/ou la seconde surface d'appui (22b) étant retouchée par enlèvement de copeaux.
